# EUROPÄISCHE PATENTANMELDUNG

(11) **EP 2 189 384 A1**
(43) Veröffentlichungstag der Anmeldung: **26.05.2010**
(21) Anmeldenummer: 10155976.3
(22) Anmeldetag: 23.01.2003
(51) Int. Cl.: B65D 25/20, B65G 1/137, B65G 47/49

(54) **Farbcode**

(30) Priorität: 23.01.2002 DE 10202477
(62) Teilanmeldung aus: 03704458.3
(71) Anmelder: IFCO Systems GmbH, 82049 Pullach (DE)
(72) Erfinder: Müller, Stefan, 85376, Giggenhausen (DE)
(74) Vertreter: Schoppe, Fritz

(57) **Zusammenfassung**

Ein Mehrwegbehälter für den Warenumschlag und für die Lokalisierung und/oder Kennung in einem Mehrwegbehälter-Umlaufsystem, in welchem der Behälter (1) zwischen verschiedenen Stationen, wie Ausgabestation des Umlaufsystems, Produktionsstätten, Lieferanten, Händler, Verkaufsstätten, Lager- und Reinigungsstationen und dergleichen zirkuliert wird, wobei der Behälter mit einem Kennungsmittel versehen ist, welches spezifische Informationen zur Identifizierung und Lokalisierung des Behälters und/oder des Behälterinhalts enthält, die durch Kennungsleseeinrichtung abfragbar sind, wobei die abgefragten Daten zentral und/oder dezentral gesammelt und ausgewertet werden, ist **dadurch gekennzeichnet, dass** das Kennungsmittel durch einen am Behälter (1) anordbaren Träger mit spezifischen, den Behälter individualisierten Farbcode gebildet ist.

## Beschreibung

Die Erfindung betritt einen Mehrwegbehälter für den Warenumschlag, der insbesondere für die Lokalisierung des Behälters in einem Mehrwegbehälter-Umlaufsystem vorgesehen ist. Der Mehrwegbehälter nach dem Oberbegriff des Patentanspruches 1 wird insbesondere für den Transport von Obst und Gemüse verwendet. Hierzu werden zumeist Behälter eingesetzt, die kastenförmig ausgebildet sind, d.h. vier Seitenwände und einen Kastenboden aufweisen. Sehr häufig sind diese Kästen als Klappkästen ausgebildet, wobei die Seitenwände am Boden angelenkt und nach innen auf den Boden zu einklappbar sind.

Mehrwegbehälter aus Kunststoff werden mehr und mehr für den Warenumschlag verwendet. Hierbei kann es sich sowohl um Kästen aber auch um Paletten, Trays und kistenförmige bzw. containerförmige Behälter handeln, die üblicherweise aus vier Seitenwänden und einem Kastenboden aufgebaut sind. Um für den Rücktransport Platz zu sparen, sind hierbei bevorzugt die Seitenwände klappbar ausgebildet, so dass die Seitenwände nach innen auf den Behälterboden zu unter entsprechender Volumenverminderung klappbar sind. Hierbei gibt es eine Reihe unterschiedlicher Konstruktionen solcher Mehrwegbehälter, wobei die Seitenwände entweder über Gelenkscliarniere oder Firmscharniere am Kastenboden angelenkt sind. In aufgerichteter Stellung zur Bildung des Behälters sind hierbei die Seitenwände mittels üblicher Rasthaken und Rastnasen miteinander verriegelt, so dass ein stabiler Behälter gewährleistet ist.

Derartige Mehrwegbehälter eignen sich insbesondere für die Anwendung in sog. Mehrwegbehälter-Umlaufsystemen, bei denen die Behälter innerhalb eines sog. Poolsystems zwischen verschiedenen Stationen zirkuliert werden. Beispielsweise werden die Mehrwegbehälter vom Dienstleister des Poolsystems an Produzenten der Ware geliefert, etwa eine Obstplantage in Portugal, welche die geerntete Ware, etwa Orangen, in den Mehrwegbehältern verpackt. Diese Mehrwegbehälter mit den darin aufgenommen Waren, hier Orangen, können dann durch Zwischenschaltung von Zwischenhändlern an Verkaufsstätte in verschiedenen Ländern geliefert werden, wo die Ware verkauft wird. Die leeren Mehrwegbehälter werden vom Verkäufer entweder an weitere Produzenten versendet oder zurück zum Dienstleister des Poolsystems gebracht, wo die Behälter ggf. nach einem vorherigen Reinigungsvorgang dann wieder an unterschiedliche Produzenten versandt werden.

Diese Umlaufsysteme haben sich bewährt, wobei in diesen Umlaufsystemen, je nachdem, wie viele Länder einbezogen sind, hunderttausende von Mehrwegbehältern zirkulieren. Es ist verständlich, dass es im Sinne einer Steuerung der Logistik für den Dienstleister des Poolsystems wichtig ist, dass die Anzahl und Art sowie der jeweilige Standort der Mehrwegbehälter, die etwa in Europa zwischen den Produzenten, den Zwischenhändlern und den Verkaufsstätten zirkulieren, überwacht werden, um frühzeitig bestimmen zu können, wohin leer zurückgeführte Mehrwegbehälter zu welcher Zeit und in welcher Anzahl dann wieder an unterschiedliche Produzenten geliefert werden können.

Zur Lokalisierung derartiger Behälter in Mehrwegbehälter-Umlaufsystemen ist es bekannt, sogenannte Transponder zu verwenden, die Barcodes aufweisen, die abgetastet werden. Diese auf den Behältern angebrachten Transponder können auch mit Antennen ausgerüstet sein, so dass die Kästen bzw. Behälter über Funk lokalisierbar sind. Die Nachteile dieses Transponder-Behältersystems bestehen allerdings darin, dass sich die Abtastvorgänge im Bereich von 2 bis 3 Minuten bewegen, und damit vergleichsweise lange dauern, was die Effizienz eines derartigen Kontrollsystems entscheidend herabsetzt. Zudem ist man bezüglich der Frequenzen auf behördliche Vorgaben bezüglich Frequenzverteilung beschränkt und die kommerzielle nutzbaren Frequenzen sind in punkto Reichweite begrenzt, so dass dieses System nur innerhalb enger Grenzen einsetzbar ist.

Aufgabe der Erfindung ist es deswegen, einen Behälter für die Lokalisierung und Kennung in einem Mehrwegbehälter-Umlaufsystem zu schaffen, welcher schnell, sicher und einwandfrei lokalisierbar ist. Insbesondere soll hierbei auch eine Kennung dergestalt erfolgen können, dass neben den behälterspezifischen Daten, wie etwa Alter des Behälters, Anzahl der Umlaufzyklen, Ort des Behälters, auch entsprechende Angaben über die Art der verwendeten Ware, wie etwa Verfallsdatum, Lieferzeiten und dergleichen zur Verfügung gestellt werden können.

Diese Aufgabe wird erfindungsgemäß durch die im kennzeichnenden Teil des Anspruchs 1 enthaltenen Merkmale gelöst, wobei zweckmäßig Weiterbildungen durch die Merkmale in den auf den Behälter bezogenen Unteransprüchen gekennzeichnet sind. Ferner betrifft die Erfindung einen Farbcode für einen solchen Behälter sowie ein Behälterfindungssystem für die Lokalisierung derartiger Behälter, die mit einem Farbcode bzw. entsprechenden Farbcoden versehen sind. Nach Maßgabe der Erfindung dient der Mehrwegbehälter für den Warenumschlag zum Zwecke der Lokalisierung der einzelnen Behälter mit einem Farbcodeträger versehen, wobei der Farbcode so ausgelegt bzw. ausgebildet ist, dass durch den Farbcode der individuelle Behälter spezifiziert ist. Dies kann durch gezielte Auswahl verschiedener Farben in Verbindung mit spezifischen Farbabstufungen bzw. Farbtönen erfolgen, da jede Farbe in Farbtöne unterteilt werden kann, das mit einem optischen Farbmessgerät abhängig vom spezifischen gemessenen Farbton ein Behälter identifiziert werden kann. Dieser spezielle Farbcode ist mit einer Behälternummer gekoppelt, sodass die vor Ort ausgewerteten Daten von einer Zentralstelle verwertet werden können.

Zweckmäßiger Weise sind die Farbcodes bzw. Farbcodeträger zumindest an einer Seitenwand, jedoch bevorzugt an allen Seitenwänden vorgesehen. Wird in einer bestimmten Station, etwa in der Verkaufsstätte, der Kasten auf einem Förderer transportiert, an dem eine entsprechende Kamera vorgesehen ist, dann wird automatisch der Kasten vor Ort erfasst und damit individualisiert dargestellt, also lokalisiert, sodass die Daten an eine Zentralstelle gegeben werden können, wo sozusagen dann der Ort des Behälters jederzeit bekannt ist. Auf diese Weise kann der Laufweg des Behälters innerhalb des Poolsystems überwacht werden. Dies ist für die Logistik eines Mehrwegebehälter-Umlaufsystems sehr wesentlich, da frühzeitige entsprechende Entscheidungen bezüglich der weiteren Verwendung des bzw. der Behälter getroffen werden kann.

Zweckmäßiger Weise werden zur Erfassung des Behälters Kameras verwendet, die an der Förderstätte der Verkaufstätte platziert sind. Um auch eine sichere Auswertung der Behälter zu ermöglichen, ist es hierbei bevorzugt, dass je Förderstrecke zwei gegenüberliegend angeordnete Kameras verwendet werden, wobei die Kameras jeweils so in Richtung auf die auf der Förderstrecke transportierten Behälter ausgerichtet sind, dass diese den Farbcode bzw. den Farbcodeträger erfassen und auswerten können. In diesem Zusammenhang ist es zweckmäßig, wenn jede der Seitenwände des Behälters mit dem entsprechenden Farbcode bzw. Farbcodeträger versehen ist, da von der Bedienungsperson nicht eine exakte Ausrichtung des Behälters auf der Förderstrecke erwartet werden kann. Durch eine solche Anordnung der Farbcodes bzw. der Farbcodeträger auf einem Behälter ist sichergestellt, dass in jeder Lage des Behälters eine sichere Erfassung und Identifizierung des Behälters durch die Kennungsleseeinrichtung möglich ist. Hierbei ist es möglich, dass die Kameras nicht nur aufgrund eines optischen Farblesegeräts bzw. Farbmessgeräts die spezielle Farbe bzw. die speziellen Farben, falls zur Identifizierung mehrere Abschnitte mit unterschiedlichen Farben verwendet werden, erkennen und auswerten können, vielmehr auch die Struktur der Geometrie des Farbcodeträgers, also eine oder mehrere Ringflächen und die Anzahl der Abschnitte, sodass bei Bedarf auch weitergehende Informationen bezüglich des Behälters ablesbar sind bzw. eine entsprechend verfeinerte Ablesung zum Zwecke der Kennung möglich ist.

Vorteilhaft ist es, wenn die auf einem Ständer beidseits der Förderstrecke angeordneten Kameras in den Ständern eines Portals aufgenommen werden, durch welches sich die Förderstrecke erstreckt und durch welches die Behälter transportiert werden. Bei einer solchen portalmäßigen Anordnung können auch auf einer Palette angeordnete Kästen gelesen werden, da auf einer Palette üblicherweise zwei Reihen von Kästen nebeneinander angeordnet sind.

Die abgelesenen Daten können vor Ort in einem Speicher gesammelt oder auch unmittelbar an einen Zentralspeicher gegeben werden. Der Zentralspeicher ist mit einem Rechner verknüpft, sodass eine entsprechende Datenauswertung möglich ist. Zweckmäßigerweise ist hierbei der Rechner zentral innerhalb des Poolsystems angeordnet. Mit Auswertung des Farbcodes kann vor Ort auch die entsprechende Nummer des Behälters ausgegeben werden, sodass etwa an der Verkaufsstätte eine Information über den Behälter, etwa Leerzustand bzw. neue Abpackung, zugeordnet und an die Zentralstelle weitergegeben wird. Für diesen Fall lässt sich auch ein geänderter Wareninhalt jederzeit überwachen. Dies ist deswegen zweckmäßig, weil dann auch zentral bereits die vor Ort, etwa an der Verkaufsstätte ermittelten Behälter an eine andere Station weiterbefördert werden können, etwa wenn an der Verkaufsstätte der Leerzustand der Behälter ermittelt und der Zentralstelle angezeigt wurde. Die Angabe der Informationen an die Zentralstelle kann beispielsweise durch Datenverbund, also entsprechende Datenverknüpfung erfolgen, aber auch durch E-mail und durch andere Kommunikationen.

Nachfolgend wird ein bevorzugtes AusRührungsbeisoiel der Erfindung anhand der Zeichnung beschrieben. Darin zeigen rein schematisch
- Figur 1:: Eine Teilansicht eines Behälters, der auf einer Seitenfläche mit einem Farbcode bestückt ist sowie
- Figur 2:: Die schematische Darstellung einer Kennungsleseeinrichtung an einer Förderstrecke.

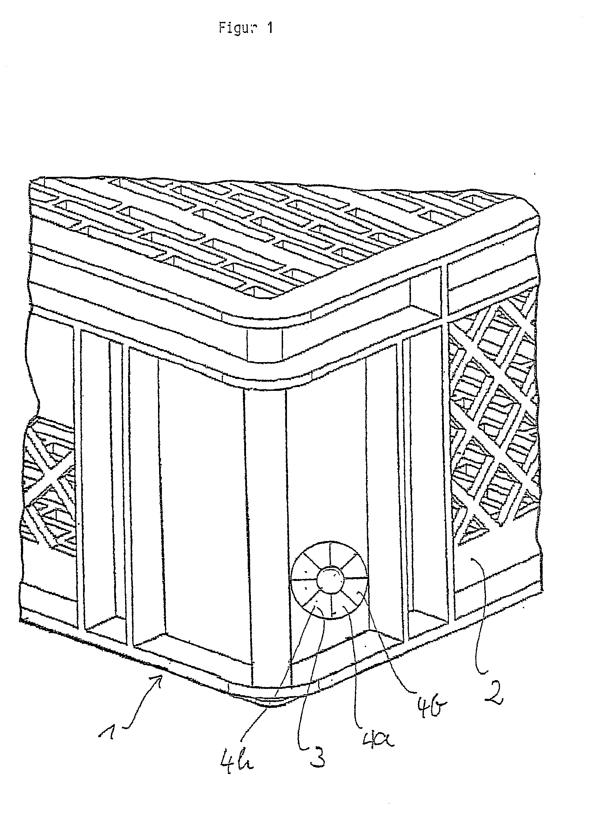

Die Figur 1 zeigt in perspektivischer Ansicht den Eckbereich eines Behälters 1, dessen mit 2 bezeichnete Seitenwand mit einem Farbcode 3 bestückt ist. Hierzu ist ein Träger vorgesehen, der etwa auf die Seitenwand aufgeklippst oder mit der Seitenwand verklebt werden kann. Dieser Träger, der hier durch eine kreisförmige Scheibe gebildet ist, weist mehrere auf einer Kreisringfläche angeordnete Abschnitte 4a bis 4h auf, die mit unterschiedlicher Farbe belegt sein können. Die Farbzusammenstellung bzw. die gewählten Farbtöne sind so aufbereitet, dass damit ein spezieller individueller Behälter identifiziert werden kann, was über eine Kamera mit einem entsprechenden Farbmessgerät möglich ist. Dadurch lässt sich der Behälter jeweils dort, wo eine entsprechende Kennungsleseeinrichtung mit Kameras vorhanden ist lokalisieren und damit der Weg des Behälters im Poolumlaufsystem überwachen.

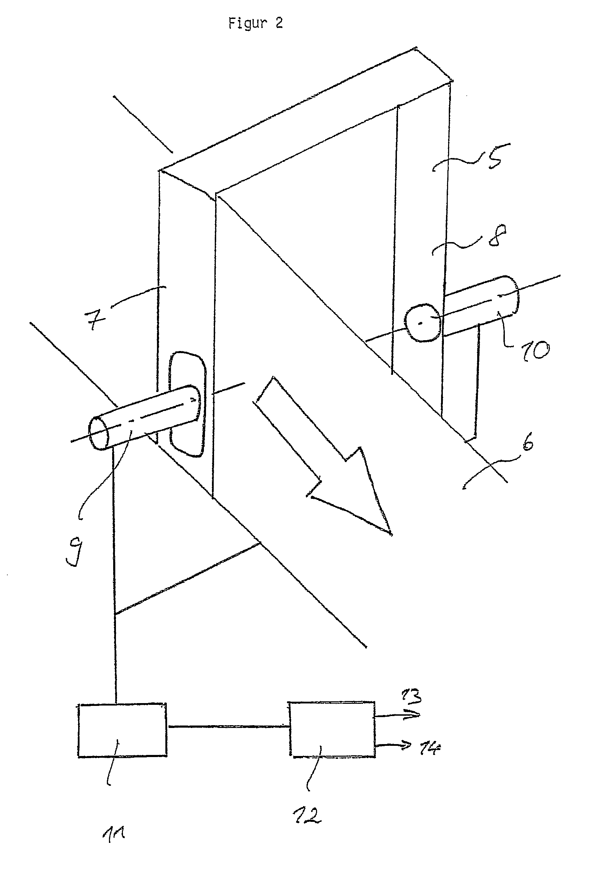

Figur 2 zeigt eine Kennungsleseeinrichtung in Art eines Portals 5, welches eine Förderstrecke 6 überspannt, die beispielsweise durch einen Endlosförderer oder Transportrollen gebildet sein kann. An den beiden Ständern 7 und 8 des Portals ist jeweils eine Kamera 9 und 10 vorgesehen. Die Kameras 9 und 10 sind hierbei so in Richtung auf die Förderstrecke 6 ausgerichtet, dass sie bei Durchlauf eines Behälters durch das Portal 5 auf den Farbcode 3 ausgerichtet sind, diesen also ablesen können. Dadurch, dass auf jeder Seite des Portals eine Kamera vorgesehen ist ist für den Fall, dass auf jeder Seitenwand des Behälters ein Farbcode vorgesehen ist, eine einwandfreie Identifizierung des speziellen Behälters möglich. Die hierbei gewonnenen Informationen können beliebig ausgewertet werden, das heißt je nach Art und Ausbildung des Poolsystems. Im dargestellten Ausfuhrungsbeispiel werden jedenfalls die von den Kameras 9 und 10 aufgenommenen und gemessenen bzw. bewerteten Daten in einem Speicher 11 gesammelt, der zentral oder dezentral vorgesehen sein kann. In einem Rechner 12 erfolgt dann die entsprechende Auswertung der Daten, wobei über den Rechner dann auch weitergehende Informationen an verschiedene Stationen des Poolumlaufsystems zum Zwecke der Steuerung des Behälterumlaufs gegeben werden können. Dies ist durch die Pfeile 13 und 14 signalisiert.

## Patentansprüche

1. Farbcode für einen Mehrwegbehälter für den Warenumschlag und für die Lokalisierung und/oder Kennung in einem Mehrwegbehälter-Umlaufsystem, in welchem der Behälter (1) zwischen verschiedenen Stationen, wie Ausgabestation des Umlaufsystems, Produktionsstätten, Lieferanten, Händler, Verkaufsstätten, Lager- und Reinigungsstationen und dergleichen zirkuliert wird, wobei der Behälter mit einem Kennungsmittel versehen ist, welches spezifische Informationen zur Identifizierung und Lokalisierung des Behälters und/oder des Behälterinhlts enthält, die durch Kennungsleseeinrichtungen abfragbar sind, wobei die abgefragten Daten zentral und/oder dezentral gesammelt und ausgewertet werden, **gekennzeichnet durch** einen Träger, der **durch** die Aufnahme mindestens einer spezifischen und behälteridentifizierenden Farbe oder Farbtons oder mehrere den Behälter spezifizierenden Farben oder Farbtöne ausgebildet ist.

2. Farbcode nach Anspruch 1, **dadurch gekennzeichnet, dass** der Farbcode mit einer geometrischen Struktur unterlegt ist, die mehrere Abschnitte aufweist, wobei die Abschnitte mit Farben für die Identifizierung und Lokalisierung des Behälters und/oder des Behälterinhalts belegt sind.

3. Farbcode nach Anspruch 1 oder 2, **dadurch gekennzeichnet, dass** jedem Farbcode eine Behälternummer zugeordnet ist, und dass die verschiedenen Stationen des Poolsystems mit einer Einrichtung zur Erfassung der Behälternummer versehen und mit der Zentralstelle derartig verknüpft sind, dass Behälter spezifische Informationen, insbesondere Wareninhalt oder Leergutzustand des bzw. der Behälter an die Zentralstelle sendbar sind.

4. Farbcode nach Anspruch 1, 2 oder 3, **dadurch gekennzeichnet, dass** der Farbcode auf einem Träger aus Kunststoff, insbesondere einem kreisrunden Träger ausgebildet ist.

5. Farbcode nach einem der Ansprüche 1 bis 4, **dadurch gekennzeichnet, dass** die Farbcodeoberfläche mit einer transparenten Schutzbeschichtung versehen ist.
